Europäisches Patentamt

European Patent Office

Office européen des brevets

(11) Publication number: **0 267 630 B1**

(12) **EUROPEAN PATENT SPECIFICATION**

(45) Date of publication of patent specification: **11.03.92**

(51) Int. Cl.⁵: **C11B 5/00, A23L 3/34, A23F 3/16, A23F 3/18**

(21) Application number: **87117046.0**

(22) Date of filing: **09.11.84**

(60) Publication number of the earlier application in accordance with Art.76 EPC: **0 169 936**

(54) **Antioxidant composition.**

(30) Priority: **15.12.83 US 561678**
**14.06.84 US 620754**

(43) Date of publication of application:
**18.05.88 Bulletin 88/20**

(45) Publication of the grant of the patent:
**11.03.92 Bulletin 92/11**

(84) Designated Contracting States:
**AT BE CH DE FR IT LI LU NL SE**

(56) References cited:
DE-A- 2 448 278
GB-A- 1 055 550
US-A- 3 959 497

CHEMICAL ABSTRACTS, vol. 101, 1984, page 422, abstract no. 37394m, Columbus, Ohio, US; & JP-A-59 45 385 (ZAIDAN HOJIN KYAIKU BUNKA KENKYUSHO) 14-03-1984

CHEMICAL ABSTRACTS, vol. 82, no. 23, 9th June 1975, page 424, abstract no. 153982q, Columbus, Ohio, US; M.A. BOKUCHAVA et al.: "Antioxidant properties of a brown tea pigment on margarine", & MASLO-ZHIR. PROM-ST.1975, (2), 15-16

FSTA, July 1979, no. 79038760; Z.V. KOROB-KINA et al.: "Effect of preliminary treatment of raw materials on retention of vitamins in frozen fruit and vegetables", & KIEVSKII TORGOVO-EKONOMICHSKII INST. KIEV. USSR KONSERVNAYA I OVOSHCHESUSHIL'NAYA PROMYSHLENNOST', no. 5, 1978, pages 36-39

(73) Proprietor: **SOCIETE DES PRODUITS NESTLE S.A.**
**Case postale 353**
**CH-1800 Vevey(CH)**

(72) Inventor: **Chambers, Laura Jo**
**West Shore-Lake Waramaug**
**New Preston Conn. 0677(US)**
Inventor: **Mai, Jimbin**
**5 Foxburn Street**
**New City N.Y. 10956(US)**
Inventor: **McDonald, Richard E.**
**10160 Bennington Drive**
**Cincinnati, OH 45241(US)**

## Description

The present invention relates to antioxidants for food substances, more particularly to antioxidants obtained by the extraction of tea leaves at temperatures of at least 120°C as in certain processes for the production of instant tea.

Lipid autoxidation occurring in foods has always been a concern for both food processors and consumers and the most common method used to inhibit lipid oxidation is the application of synthetic antioxidants which block the oxidative reactions. However, owing to toxicological and nutritional considerations, only a very few synthetic antioxidants are permitted in food applications, e.g., butylhydroxytoluene (BHT), butylhydroxyanisole (BHA), propyl gallate (PG) and t-butyl hydroquinone (TBHQ). Even these antioxidants are now being examined by regulatory agencies and consumer activists and these developments have urged the need to exploit new sources of natural antioxidants.

One natural product with excellent antioxidant properties, Rosemary AR, suffers from the disadvantage of having a very intensive characteristic herb flavour which may limit its use in some applications.

It is also reported in the literature that certain tea extracts have antioxidant properties, e.g., extracts of tea leaves, tea grounds, tea sweepings and tea wastes, but in all the tea extracts so far described, the antioxidant activity is generally very low and the application of each extract is limited to a restricted class of food materials. As far as we are aware, no study on the antioxidant properties of instant tea or the intermediate extracts produced during its manufacture has been documented. For example, C.A. 82, 153982q states that brown tea pigment has antioxidant properties in margarine and that ascorbic acid improved the antioxidant activity. However, the main extraction products of tea pigments are theaflavins and thearubigens whereas hot water extraction of tea leaves produces substantially no colour compounds.

We have found surprisingly, that certain treated extracts of black tea leaves have an antioxidant activity comparable with or superior to synthetic antioxidant systems, and they do not suffer from the intensive flavour problem of Rosemary AR. In addition, these extracts are effective in a much wider variety of food systems than tea extracts previously described as having antioxidant activity. Unlike conventional antioxidants, they are both oil and water soluble and this property is especially advantageous when the food systems are oil-in-water emulsions and water-in-oil emulsions. Still further, we have also found that these extracts, by soaking uncooked roast beef overnight in a tea extract solution of about ●25% by weight, are useful in inhibiting the "warmed-over" flavor commonly associated with cooked roast beef which has been reheated.

Accordingly, the present invention provides a composition comprising a food susceptible to lipid oxidation and a tea extract formed by aqueous extraction of black tea leaves at a temperature from 80°C to 130°C to give an extract (Fraction I) characterised in that the extract is then either:

a) heated at a temperature from 130°C to 190°C for a period of from 10 to 60 minutes

b) further extracted with a water immiscible organic solvent which extracts at least a part of the polyphenols from the extract

c) treated with tannase or

d) mixed with ascorbic acid or lecithin.

Food materials that may be stabilised against oxidation are, for example, frying oils and fats, potato flakes, bakery products, meat emulsions, precooked cereals, instant noodles, soybean milk, chicken products, emulsion products such as sausage, mayonnaise and margarine, frozen fish, frozen pizza, cheese and animal foods.

Instant tea is routinely prepared by the hot water extraction of tea leaves, for example, as described in World Coffee and Tea, April 1972, pages 54-57, "The practice of instant tea manufacture". In the present invention, similar extraction conditions used in instant tea manufacture are followed wherein the extraction of the tea leaves is carried out at a temperature from 80°C to 130°C to obtain the tea extracts which, after treatment, have valuable antioxidant properties.

Excellent antioxidant activity is obtained when the amount of polyphenols is at least 5% by weight and preferably at least 8% by weight based on the weight of tea solids.

The major phenolic constituents of the tea solids and the amounts of each usually present in the extracts are gallic acid (0.05 to 1.5%), epicatechin (0.01 to 0.5%), catechin (0.01 to 0.6%), epigallocatechin (0.01 to 0.75%), epicatechin gallate (0.01 to 1.00%) and epigallocatechin gallate (0.01 to 1.5%), all the amounts being given as percentages by weight based on the weight of tea solids. The amount of extract present in the food is conveniently such that the tea solids content is from 0.008 to 1.00% by weight, preferably from 0.02 to 0.75% and especially from 0.05 to 0.5% by weight based on the weight of food. The tea extracts (Fraction I) show antioxidative synergism in food either with ascorbic acid or with lecithin. The amount of ascorbic acid or lecithin used in a synergistic mixture may be from 0.02 to 2.00%, preferably from 0.05 to 1.00% by weight based on the weight of food, while the amount of extract is conveniently such that the solids content is from 0.01 to 0.5% by weight based on the weight of food.

In another embodiment of the present invention, the Fraction I tea extracts may be further extracted with a water-immiscible organic solvent capable of extracting at least a part of the polyphenols from the extracts, for example, by partitioning. Examples of such solvents are petroleum ether, pentane, diethyl ether, hexane, ethyl propionate, ethyl acetate, methyl iso-butyl ketone or halogenated hydrocarbons such as Freons. The extracted polyphenols may then be separated, for example, by removal of the solvent by rotary evaporation, and reconstituted with water and freeze-dried. Such polyphenol extracts have superior antioxidant activity and oil solubility to the tea extracts from which they are extracted.

In a further embodiment of this invention, the Fraction I extract is heated at a temperature from 130°C to 210°C, preferably from 160°C to 210°C, for a period of, for instance, 10 to 60 minutes to give an extract with improved antioxidative effectiveness.

In yet another embodiment of the present invention, the Fraction I tea extract may be treated with tannase to increase the antioxidant activity. The treatment with tannase is preferably carried out at a pH from 4.0 to 5.5, especially from 4.5 to 5.0. The amount of the tannase used to treat the tea extract is not critical but usually an amount from 0.02% to 1.0% by weight based on the weight of tea solids is effective and conveniently an amount from 0.05% to 0.5% by weight based on the weight of tea extract may be used. The synergistic antioxidant effect with ascorbic acid is especially marked when the tea extracts are treated with tannase, especially at low levels of application, e.g., 0.02% to 0.05% by weight of solids based on the weight of food.

The following examples further illustrate the present invention.

Example 1

Black tea leaves were extracted at a temperature between 110°C and 120°C for 30 minutes to give Fraction I.

A sample of Fraction I formed was heated at 190°C for 30 minutes. Samples of Fraction I and the treated Fraction I were incorporated into separate 100g batches of chicken fat at a solids content of 500 ppm. The antioxidative activity was determined by a modified Rancimat Method which is an accelerated oxidation test described by J. Frank, J. Geil and R. Freaso in "Food Technology 1982, Vol. 36, No. 6, p. 71", in chicken fat at 100°C. The oxidative stability of the chicken fat was determined by the induction period (IP), the time required for the fat to become rancid. To facilitate comparison of the data, the antioxidant index (AI), defined as the induction period of the treatment divided by the induction period of the control was used to report the effectiveness of the antioxidants. In the test, frozen chicken fat was melted directly over low heat on a stove top. The test antioxidants were incorporated directly into 100g samples of the melted fat and homogenised. Ten gram samples of the control chicken fat, and chicken fat containing the antioxidant were then placed in the Rancimat reaction vessels for the accelerated oxidation test. The test temperature was 110°C instead of 100°C which is prescribed by the Rancimat Method noted above. This was the only modification made to the Rancimat procedure. The air flow rate was 20 litre/hr. The antioxidant index was found to be 2.4 for Fraction I and 4.1 for treated Fraction I, an improvement of 70%.

Example 2

A sample of Fraction I formed in the process described in Example 1 was mixed for 1 hour at 45°C and at pH 4.5 with 0.1% by weight based on the weight of Fraction I of tannase obtained from Enzyme Development Company, NY, NY. Samples of Fraction I and the tannase treated Fraction I were incorporated into chicken fat at a solids content of 500 ppm and the antioxidant index measured in the way described in Example 1 was found to be 1.5 for Fraction I and 2.8 for the tannase treated Fraction I showing that the tannase treatment almost doubled the antioxidant activity of Fraction I.

Example 3

Samples of Fraction I formed in the process described in Example 1, Fraction I treated with tannase as described in Example 2, and a mixture of 85 parts of a tannase treated Fraction I and 15 parts of ascorbic acid were incorporated into separate samples of chicken fat at a solids content concentration indicated in Table V. The antioxidant index (AI) of each sample was measured in the way described in Example 1 and the values of the AI at the various concentrations are shown in Table I.

3

EP 0 267 630 B1

TABLE I

| Antioxidant Tea solids (% concentration in chicken fat) | | | | | |
|---|---|---|---|---|---|
| | 0.025 | 0.05 | 0.10 | 0.25 | 0.50 |
| Fraction I | 1.2 | 1.4 | 1.8 | 2.7 | 3.4 |
| Tannase treated Fraction I | 1.6 | 2.5 | 3.4 | 4.6 | 4.7 |
| Tannase treated Fraction I + Ascorbic acid | 3.5 | 4.5 | 4.8 | 5.8 | 7.1 |

These results show that there is excellent synergism between tannase treated Fraction I and ascorbic acid, especially at solids concentrations of 0.025% and 0.05%.

**Claims**

**Claim for the following Contracting States : BE, CH, DE, FR, IT, LI, LU, NL, SE**

1.  A composition comprising a food susceptible to lipid oxidation and a tea extract formed by aqueous extraction of black tea leaves at a temperature from 80°C to 130°C to give an extract (Fraction I) characterised in that the extract is then either:
    a) heated at a temperature from 130°C to 190°C for a period of from 10 to 60 minutes or
    b) further extracted with a water immiscible organic solvent which extracts at least a part of the polyphenols from the extract or
    c) treated with tannase or
    d) mixed with ascorbic acid or lecithin.

**Claim for the following Contracting State : AT**

1.  A process for the preparation of a food composition which comprises mixing a food susceptible to lipid oxidation and a tea extract formed by aqueous extraction of black tea leaves at a temperature from 80°C to 130°C to give an extract (Fraction I) characterised in that the extract is then either:
    a) heated at a temperature from 130°C to 190°C for a period of from 10 to 60 minutes
    b) further extracted with a water immiscible organic solvent which extracts at least a part of the polyphenols from the extract
    c) treated with tannase or
    d) mixed with ascorbic acid or lecithin.

**Revendications**

**Revendication pour les Etats contractants suivants : BE, CH, DE, FR, IT, LI, LU, NL, SE**

1.  Composition comprenant un aliment sensible à l'oxydation des lipides et un extrait de thé formé en soumettant à une extraction en milieu aqueux des feuilles de thé noir à une température de 80°C à 130°C, ce qui donne un extrait (Fraction I), caractérisée en ce que l'extrait est ensuite :
    a) chauffé à une température de 130°C à 190°C pendant un temps de 10 à 60 minutes, ou
    b) soumis à une nouvelle extraction avec un solvant organique non miscible à l'eau qui extrait au moins une partie des polyphénols de l'extrait, ou
    c) traité avec une tannase, ou bien
    d) mélangé à de l'acide ascorbique ou de la lécithine.

**Revendication pour l'Etat contractant suivant : AT**

1.  Procédé de préparation d'une composition alimentaire, qui consiste à mélanger un aliment sensible à l'oxydation des lipides et un extrait de thé formé en soumettant à une extraction en milieu aqueux des feuilles de thé noir à une température de 80°C à 130°C, ce qui donne un extrait (Fraction I), caractérisé en ce que l'extrait est ensuite :
    a) chauffé à une température de 130°C à 190°C pendant un temps de 10 à 60 minutes, ou
    b) soumis à une nouvelle extraction avec un solvant organique non miscible à l'eau qui extrait au moins une partie des polyphénols de l'extrait, ou
    c) traité avec une tannase, ou bien

4

d) mélangé à de l'acide ascorbique ou de la lécithine.

**Patentansprüche**
**Patentansprüche für folgenden Vertragsstaaten : BE, CH, DE, FR, IT, LI, LU, NL, SE**

1. Zusammensetzung mit einem gehalt an einem gegen Lipidoxidation empfindlichen Nahrungsmittel und an einem Tee-Extrakt, der durch wäßrige Extraktion von Blättern von schwarzem Tee bei einer Temperatur von 80° C bis 130° C unter Ausbildung eines Extraktes (Fraktion I) gebildet wird, dadurch gekennzeichnet, daß der Extrakt anschließend entweder:
   a) 10 bis 60 Minuten lang auf eine Temperatur von 130° C bis 190° C erwärmt wird oder
   b) mit einem mit Wasser unmischbaren organischen Lösungsmittel weiter extrahiert wird, welches Lösungsmittel wenigstens einen Teil der Polyphenole ans dem Extrakt extrahiert, oder
   c) mit Tannase behandelt wird oder
   d) mit Ascorbinsäure oder Lecithin vermischt wird.

**Patentanspruch für folgenden Vertragsstaat : AT**

1. Verfahren zur Herstellung einer Nahrungsmittelzusammensetzung, welches ein Vermischen eines gegen Lipidoxidation empfindlichen Nahrungsmittels mit einem Tee-Extract umfaßt, der durch wäßrige Extraktion von Blättern von schwarzem Tee bei einer Temperatur von 80° C bis 130° C unter Ausbildung eines Extraktes (Fraktion I) gebildet worden ist, dadurch gekennzeichnet, daß der Extrakt anschließend entweder:
   a) 10 bis 60 Minuten lang auf eine Temperatur von 130° C bis 190° C erwärmt wird oder
   b) mit einem mit Wasser unmischbaren organischen Lösungsmittel weiter extrahiert wird, welches Lösungsmittel wenigstens einen Teil der Polyphenole aus dem Extrakt extrahiert, oder
   c) mit Tannase behandelt wird oder
   d) mit Ascorbinsäure oder Lecithin vermischt wird.